# DEMANDE DE BREVET EUROPEEN

(11) **EP 1 928 198 A1**
(43) Date de publication de la demande: **04.06.2008**
(21) Numéro de dépôt: 07023149.3
(22) Date de dépôt: 29.11.2007
(51) Int. Cl.: H04Q 7/38

(54) **Procédé et dispositif de détermination d'un appel de groupe nouvellement diffusé par au moins une station de base d'un système de téléphonie cellulaire**

(30) Priorité: 30.11.2006 FR 0610500
(71) Demandeur: Sagem Communications, 75015 Paris (FR)
(72) Inventeur: Dorion-Cousinat, Marc, 69009 Lyon (FR)
(74) Mandataire: Maillet, Alain

(57) **Abrégé**

La présente invention concerne un procédé de détermination d'un appel de groupe nouvellement diffusé par au moins une station de base d'un système de téléphonie cellulaire supportant la diffusion d'appels de groupe. Ledit nouvel appel de groupe étant notifié à chaque station mobile se trouvant sous la couverture de ladite ou de l'une desdites stations de base par l'intermédiaire d'un signal destiné à porter un message dit de notification dudit appel de groupe créé au cours d'une étape de création (200) par une entité dudit système de téléphonie cellulaire, caractérisée en ce qu'au cours de ladite étape de création, une information (Refl), dite de référence, qui est destinée à identifier de manière unique ledit appel de groupe, est incluse dans ledit message de notification,

## Description

La présente invention concerne un procédé de détermination d'un appel de groupe nouvellement diffusé par au moins une station de base d'un système de téléphonie cellulaire supportant la diffusion d'appels de groupe.

Il est connu des systèmes de téléphonie cellulaires qui sont adaptés à supporter un service de diffusion d'appels, c'est-à-dire des appels émis sur au moins une partie de la zone géographique couverte par le réseau de téléphonie vers les stations mobiles qui se trouvent dans cette zone géographique et qui ont souscrit ce service au préalable. Il est également connu des systèmes de téléphonie cellulaires qui sont adaptés à supporter un service d'appels de groupes c'est-à-dire d'appels qui sont initiés par une station mobile et qui sont accessibles par les stations mobiles qui, d'une part, se trouvent dans la zone géographique dans laquelle ces appels sont diffusés et, d'autre part, qui ont souscrit au préalable ce service. Dans la suite de la description, les appels de groupe et les appels diffusés sont rassemblés sous la dénomination appel de groupe.

Par exemple, les systèmes de téléphonie basés sur les spécifications 3GPP supportent deux services d'appels de groupe. Le premier de ces services d'appels de groupe appelé VBS (Voice Broadcast Service) est défini par la spécification 3GPP 43.069. Le deuxième de ces services d'appels de groupe appelé VGCS (Voice Group Call Service) est défini par la spécification 3GPP 43.068.

Chaque système de téléphonie cellulaire qui supporte des services d'appels de groupe, se doit d'informer chaque station mobile qui a souscrit ces services, des appels de groupe en cours ou tout au moins de chaque appel de groupe qui vient d'être nouvellement créé et donc nouvellement diffusé.

Par exemple, dans le cas d'un système de téléphonie cellulaire basé sur les spécifications 3GPP, chacune de ces stations mobiles est informée de manière différente sur l'état dans lequel elle se trouve. Ainsi, dans le cas où une station mobile est en veille, la station mobile reçoit un signal qui porte la liste des appels de groupe et qui est émis sur un canal de diffusion appelé NCH (Notification Channel) par la station de base de la cellule sous laquelle se trouve cette station mobile. Dans le cas où la station mobile est en mode dédié, c'est-à-dire qu'elle est en cours de communication avec une autre station mobile (appel point à point) ou qu'elle est en cours de réception d'un appel de groupe diffusé par la station de base sous la couverture de laquelle elle se trouve, la station mobile est informée de chaque nouvel appel de groupe à partir d'un signal qui porte un message de notification spécifique et qui est émis sur le canal FACCH (Fast Associated Control Channel).

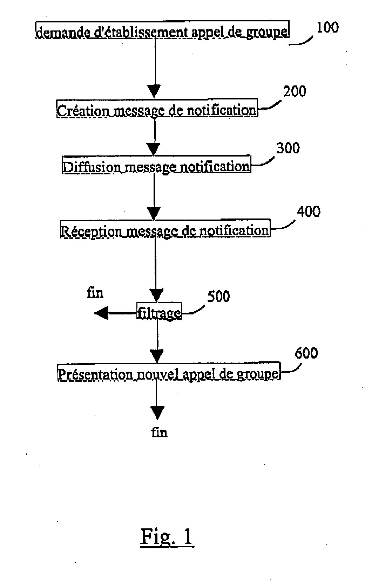

La Fig. 1 représente un schéma des étapes d'un procédé de détermination d'un appel de groupe nouvellement diffusé par au moins une station de base d'un système de téléphonie cellulaire supportant la diffusion d'appels de groupe selon l'état de la technique.

Le procédé débute par une étape 100 de demande d'établissement d'un nouvel appel de groupe AG. Pour cela, une station mobile appelée MS2 envoie un message M1 d'établissement de cet appel de groupe AG au réseau de téléphonie cellulaire NET. Ce message M1 contient, selon les spécifications 3GPP, un couple d'informations qui est formé, d'une part, d'un identifiant GID (Group Identifier) qui précise le type de l'appel de groupe AG, c'est-à-dire un identifiant qui permet d'identifier que l'appel de groupe est soit de type VBS, soit de type VGCS et, d'autre part, d'une information de localisation GCA (Group Call Attributes), c'est-à-dire une information qui définit la zone géographique sur laquelle est diffusé l'appel de groupe AG. De plus, le message M1 peut éventuellement contenir une information, dite de priorité, qui permet de déterminer la priorité donnée à l'appel de groupe. Un message M1 d'établissement d'un appel de groupe contient enfin des informations qui permettent de décrire le canal d'appel de groupe qui est utilisé par une station mobile pour participer à cet appel de groupe.

Une fois que le message M1 a été reçu par une entité réseau R, l'étape 100 est suivie d'une étape 200 de création d'un message de notification par l'entité réseau R du système de téléphonie cellulaire. Selon les spécifications 3GPP, le message de notification contient les informations contenues dans le message M1 et en particulier le couple d'informations (GID, GCA).

L'étape 200 est alors suivie d'une étape 300 de diffusion d'un signal porteur du message de notification ainsi créé sur la zone géographique définie par l'information de localisation GCA et ce au travers des stations de base dont l'union des couvertures représente cette zone géographique.

Le signal porteur d'un message de notification est, en principe, envoyé une seule fois à chaque création d'un nouvel appel de groupe. Ainsi, lorsqu'une station mobile reçoit un signal porteur d'un message de notification, cette station mobile détermine qu'un nouvel appel de groupe a été créé et informe l'utilisateur qu'il peut participer à ce nouvel appel de groupe.

Cependant, pour des raisons liées notamment aux problèmes de transmission par lien radio, il peut arriver que certaines stations mobiles ne puissent pas recevoir momentanément un signal porteur d'un message de notification. Pour s'assurer que chaque station mobile est notifiée de chaque appel de groupe nouvellement créé, il a été rajouté dans les spécifications 3GPP la possibilité d'émettre périodiquement un signal porteur d'un même message de notification. Ainsi, selon les spécifications 3GPP, chaque signal porteur d'un message de notification peut être diffusé une seule fois ou être diffusé périodiquement sans toutefois imposer l'un ou l'autre de ces modes de diffusion.

Etant donné que le mode de diffusion d'un signal porteur d'un message de notification peut varier, en particulier, selon le contenu et/ou la priorité de l'appel de groupe et que le mode de diffusion retenu n'est pas connu au préalable des stations mobiles susceptibles de participer à cet appel de groupe, à chaque réception d'un signal porteur d'un message de notification, une station mobile doit être adaptée pour déterminer si ce message de notification correspond à un nouvel appel de groupe dont elle a déjà été informée par une précédente réception d'un signal porteur de ce message de notification.

Pour cela, lorsqu'un signal porteur d'un message de notification a été reçu (étape 400) par une station mobile appelée MS1, le message de notification porté par un signal reçu est filtré au cours d'une étape 500 de filtrage. Ce filtrage est basé sur les informations contenues dans le message de notification, et notamment sur le couple d'informations formé par l'identifiant du type de l'appel de groupe GID et par l'information de localisation GCA.

Dans le cas où il est déterminé au cours de l'étape 500 que le couple d'informations (GID,GCA) n'est pas un couple d'informations contenu dans un message de notification porté par un signal qui a été reçu préalablement par la station mobile MS1, l'étape 500 est suivie d'une étape 600 de présentation à l'utilisateur de la station mobile MS1 d'une information informant cet utilisateur qu'un nouvel appel de groupe est diffusé. Par exemple, un signal sonore est alors émis par la station mobile MS1.

Dans le cas contraire où un signal porteur d'un message de notification qui contenait ce couple d'informations (GID, GCA) a été préalablement reçu, le procédé s'arrête suite à l'étape 500.

Le procédé de détermination d'un appel de groupe nouvellement diffusé, tel qu'il vient d'être décrit, ne permet pas d'assurer que chaque appel de groupe nouvellement diffusé est notifié à l'utilisateur de la station mobile MS1. Par exemple, le problème se pose lorsqu'un appel de groupe AG1, nouvellement créé, est supprimé, et qu'un autre appel de groupe AG2 du même type est créé et diffusé sur la même zone géographique. L'identifiant du type d'appel de groupe GID et l'information de localisation GCA contenus dans le message de notification restent alors inchangés, provoquant l'échec d'un filtrage basé sur ce couple d'informations.

En effet, admettons que la station mobile MS2 initie un nouvel appel de groupe AG1 et en informe le réseau de téléphonie cellulaire NET par l'envoi d'un message M1 d'établissement d'un appel de groupe qui contient notamment le couple d'informations (GID1, GCA1).

Au cours de l'étape 200, un message de notification N1 qui contient le couple d'informations (GID1, GCA1) est créé. Un signal porteur de ce message de notification N1 est alors diffusé (périodiquement ou pas) (étape 300) par l'entité réseau R au travers des stations de base dont les couvertures définissent la zone géographique précisée par l'information de localisation GCA1:

Admettons maintenant que la station mobile MS1 se trouve sous la couverture de l'une de ces stations de base. La station MS1 reçoit alors le signal porteur du message de notification N1 (étape 400), filtre ce message sur la base du couple d'informations (GID1, GCA1) contenu dans ce message (étape 500) et informe l'utilisateur de la station mobile MS1 qu'il peut participer à un nouvel appel de groupe (étape 600) en supposant que le message de notification N1 est le premier message de notification à avoir été reçu qui indique qu'un appel de groupe de type GID1 est diffusé sur la zone géographique définie par l'information de localisation GCA1.

A chaque nouvelle réception éventuelle d'un signal porteur de ce message de notification N1, la station mobile MS1 considérera alors, à juste titre, que le couple d'informations (GID1, GCA1) contenu dans le message de notification N1 qu'elle viendrait de recevoir est identique à celui contenu dans le message de notification N1 qu'elle a précédemment reçu et ne donnera aucune suite à la réception de ces messages de notification N1 successifs.

Admettons maintenant que la station mobile MS2 envoie un message de suppression de l'appel de groupe AG1 en cours de diffusion. Le réseau de téléphonie NET informe alors les stations de base émettrices du signal porteur du message de notification N1 d'arrêter la diffusion de ce signal. On peut noter que la station mobile MS2 n'est pas informée que l'appel de groupe AG1 a été supprimé et est toujours en attente de réception d'un signal porteur du message de notification N1 relatif au couple d'informations (GID1, GCA1).

Supposons enfin que la station mobile MS2 envoie un message M3 d'établissement d'un nouvel appel de groupe AG2 qui contient le même couple d'informations (GID1, GCA1) utilisé lors du précédent établissement d'appel de groupe AG1.

Un nouveau message de notification N2 est alors créé au cours de l'étape 200 et un signal porteur de ce message de notification N2 qui contient notamment le couple d'informations (GID1, GCA1) est diffusé (étape 300). La station mobile MS2 reçoit alors le signal porteur du message de notification N2 en supposant qu'elle se trouve encore à portée d'une station de base dont la couverture définit une partie de la zone géographique sur laquelle est diffusé le signal porteur du message de notification N2.

Suite à la réception du signal porteur du message de notification N2 (étape 400), la station mobile MS2 se comporte comme précédemment, c'est-à-dire qu'elle détermine par filtrage que le couple (GID1, GCA1) du message de notification N2 qu'elle vient de recevoir est identique au couple d'informations (GID1, GCA1) contenu dans le message de notification N1 relatif au premier appel de groupe AG1. Elle ne donne donc pas suite à la réception des signaux porteurs du message de notification N2. L'utilisateur n'est donc alors pas informé qu'un nouvel appel de groupe a été créé et ne pourra donc pas y participer, provoquant ainsi un dysfonctionnement de réception d'appel de groupe nouvellement diffusé.

La présente invention a notamment pour but de remédier aux inconvénients décrits ci-dessus en proposant qu'une information dite information de référence soit ajoutée dans chaque message de notification afin que chaque appel de groupe nouvellement créé soit identifié de manière unique par chaque station mobile suite à la réception d'un message de notification. Ainsi, en basant le filtrage des messages de notification sur cette information de référence, une station mobile peut faire la distinction entre la réception périodique d'un message de notification relatif à un même appel de groupe et la réception d'un message de notification d'un appel de groupe qui vient d'être créé avec le même couple d'informations qu'utilisait un appel de groupe précédent.

A cet effet, selon un premier de ses aspects, la présente invention concerne un procédé de détermination d'un appel de groupe nouvellement diffusé par au moins une station de base d'un système de téléphonie cellulaire supportant la diffusion d'appels de groupe. Ledit nouvel appel de groupe étant notifié à chaque station mobile se trouvant sous la couverture de ladite ou de l'une desdites stations de base par l'intermédiaire d'un signal destiné à porter un message de notification dudit appel de groupe créé au cours d'une étape de création par une entité réseau dudit système de téléphonie cellulaire, le procédé est caractérisé en ce qu'au cours de ladite étape de création, une information, dite de référence, qui est destinée à identifier de manière unique ledit appel de groupe est incluse dans ledit message de notification.

Selon un mode de réalisation du procédé, ladite étape de création est précédée d'une étape d'obtention de ladite information de référence à partir d'une première mémoire de ladite entité réseau.

Selon un mode de réalisation de ladite étape d'obtention, ladite étape d'obtention comporte une sous-étape de récupération d'une information de référence préalablement mémorisée dans ladite première mémoire, une sous-étape de modification de ladite information de référence ainsi récupérée et d'une sous-étape de remplacement de ladite information de référence préalablement mémorisée dans ladite première mémoire par ladite information de référence modifiée, ladite information de référence obtenue au cours de ladite étape d'obtention étant alors l'information de référence ainsi modifiée.

Selon un mode de réalisation, ledit message de notification contenant en outre un couple d'informations formé d'un identifiant du type dudit nouvel appel de groupe et d'une information de localisation dudit nouvel appel de groupe, le procédé est caractérisé en ce qu'il comporte en outre :
- une étape d'extraction de ladite information de référence à partir du message de notification porté par un signal une fois que celui-ci a été reçu par une station mobile,
- une étape de comparaison de ladite information de référence ainsi extraite et d'une information de référence récupérée à partir d'une deuxième mémoire et correspondant audit couple d'informations, et
- dans le cas où les informations de référence ainsi comparées sont différentes,
   - une étape de mémorisation dans ladite deuxième mémoire et en relation avec ledit couple d'informations de l'information de référence ainsi extraite, et
   - une étape de présentation à l'utilisateur de ladite station mobile d'une information informant cet utilisateur qu'un nouvel appel de groupe est diffusé.

Selon un mode de réalisation de l'étape de comparaison, ladite étape de comparaison est destinée à être exécutée par ladite station mobile qui a reçu un signal porteur d'un message de notification.

Selon un mode de réalisation de ladite étape de comparaison, ladite deuxième mémoire est une mémoire de ladite station mobile.

Selon un mode de réalisation de la présente invention, le procédé est caractérisé en ce que l'information de référence est incluse uniquement dans le message de notification lorsque le signal qui porte ce message est diffusé périodiquement.

Ce mode de réalisation est avantageux car il permet à une station mobile de distinguer les appels de groupe qui sont diffusés périodiquement de ceux qui ne le sont pas.

Dans le cas où l'information de localisation définit une zone géographique de diffusion dudit appel de groupe comme étant l'union des couvertures de plusieurs stations de base, le procédé est caractérisé en ce que la même information de référence est incluse dans chaque message de notification diffusé par chacune desdites stations de base.

Cette caractéristique permet d'éviter qu'une station mobile détermine avoir reçu un message de notification d'un nouvel appel de groupe lorsque cette station mobile change de stations de base pour accéder au système de téléphonie cellulaire.

Selon ses aspects matériels, la présente invention concerne une station mobile équipée de moyens qui permettent la mise en oeuvre desdites étapes d'extraction de ladite information de référence, de comparaison des informations de référence et de présentation, et d'une entité réseau d'un système de téléphonie cellulaire équipée de moyens qui permettent d'obtenir une information de référence relative à un nouvel appel de groupe et de créer un message de notification qui inclut cette information de référence.

Selon un autre de ses aspects, la présente invention concerne un système de téléphonie cellulaire qui comporte au moins une telle station mobile et une telle entité réseau.

Enfin, selon un autre de ses aspects, la présente invention concerne un signal destiné à porter un message de notification d'un appel de groupe entre entités d'un système de téléphonie cellulaire supportant la diffusion d'appels de groupe, caractérisée en ce que ledit message de notification comporte en outre une information de référence destinée à identifier de manière unique ledit appel de groupe diffusé par ledit système de téléphonie cellulaire.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints dans lesquels :
La Fig. 1 est un schéma des étapes d'un procédé de détermination d'un appel de groupe nouvellement diffusé par au moins une station de base d'un système de téléphonie cellulaire selon l'état de la technique,
La Fig. 2 est un schéma des étapes du procédé de détermination d'un appel de groupe nouvellement diffusé par au moins une station de base d'un système de téléphonie cellulaire selon la présente invention,
La Fig. 3 est un schéma d'un système de téléphonie cellulaire supportant la diffusion d'appels de groupe selon la présente invention.

Les modes de réalisation de la présente invention sont décrits ci-dessous dans le cadre des spécifications 3GPP mentionnées ci-dessus. Cependant, la portée de la présente invention ne se limite pas aux systèmes de téléphonie cellulaires basés sur ces spécifications et la présente invention peut être mise en oeuvre sur tout type de système de téléphonie cellulaire qui supporte la diffusion d'appel de groupe.

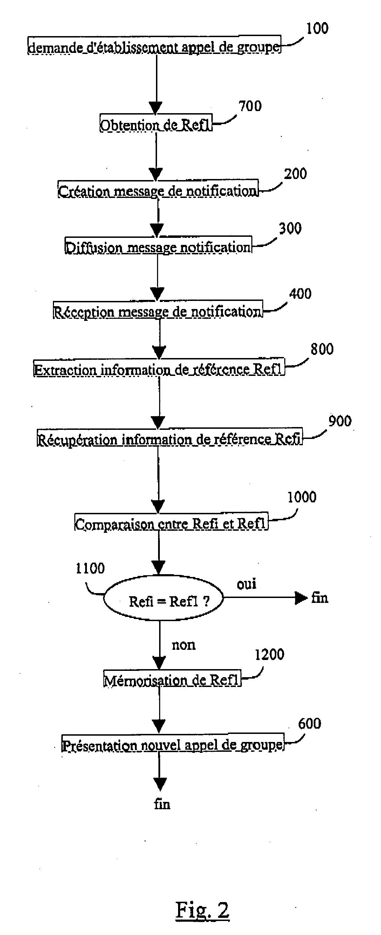

La Fig. 2 est un schéma des étapes du procédé de détermination d'un appel de groupe nouvellement diffusé par au moins une station de base d'un système de téléphonie cellulaire selon la présente invention.

Le procédé débute par l'étape 100 précédemment décrite. On rappelle qu'au cours de cette étape un message d'établissement d'un nouvel appel de groupe AG qui contient en outre un couple d'informations (GID, GCA) est émis par la station mobile MS1.

L'étape 100 est suivie d'une étape 700 d'obtention à partir d'une mémoire MEM1 d'une information de référence Ref1 qui est destinée à identifier de manière unique ledit appel de groupe AG et qui est relative au couple d'informations (GID,GCA) qui définit le type et la zone géographique du nouvel appel de groupe AG.

Selon un mode de réalisation de l'étape d'obtention 700, l'information de référence Ref1 est une version modifiée d'une information de référence Ref3 préalablement mémorisée dans la mémoire MEM1 et relative au couple d'informations (GID, GCA). Pour cela, l'étape d'obtention 700 comporte une sous-étape de récupération de l'information de référence Ref3 à partir de la mémoire MEM1, d'une sous-étape de modification de l'information de référence Ref3 ainsi récupérée et d'une sous-étape de remplacement de l'information de référence Ref3 préalablement mémorisée dans la mémoire MEM1 par la version modifiée de cette information de référence.

Un message de notification est alors créé au cours de l'étape de création 200. Il contient en outre le couple d'informations (GID, GCA) et l'information de référence Ref1 ainsi obtenue. Le message de notification ainsi créé est alors porté par un signal qui est diffusé (étape 300) par les stations de base dont l'union des couvertures représente la zone géographique requise de diffusion de l'appel de groupe.

Lorsque la station mobile MS2 se trouve sous la zone géographique de diffusion de ce message de notification, cette station mobile reçoit le signal porteur du message de notification (étape 400) et extrait, au cours d'une étape 800, l'information de référence Ref1 du message de notification porté par le signal reçu. L'étape 800 est alors suivie d'une étape 900 de récupération d'une information de référence Ref2 récupérée à partir d'une mémoire MEM2 et relative au couple d'informations (GID,GCA). L'étape 900 est alors suivie d'une étape 1000 de comparaison de l'information de référence Ref1 et de l'information de référence Ref2.

Selon un mode de réalisation, la mémoire MEM2 est une mémoire de la station mobile MS2.

Selon un mode de réalisation du procédé, l'étape de comparaison 1000 est destinée à être exécutée par la station mobile MS2.

L'étape 1000 est suivie d'une étape de décision 1100 d'arrêt du procédé.

Au cours de l'étape 1100, dans le cas où les informations de référence Ref1 et Ref2 sont identiques, c'est-à-dire que le message de notification relatif au nouvel appel de groupe est porté par un signal diffusé périodiquement et que la station mobile MS2 a préalablement reçu un signal porteur de ce message de notification, le procédé s'arrête.

Dans le cas contraire, c'est-à-dire dans le cas où les références Ref1 et Ref2 sont différentes, le procédé continue par l'étape 1200 de mémorisation dans la mémoire MEM2 de l'information de référence Ref1 et ce en relation avec le couple d'informations (GID,GCA). On peut noter que dans le cas où une information de référence aurait été mémorisée préalablement dans la mémoire MEM2 en relation avec le couple d'informations (GID, GCA), cette information de référence est remplacée par l'information de référence Ref1. L'étape de mémorisation 1200 est alors suivie de l'étape 600 de présentation à l'utilisateur de la station mobile MS2 d'une information l'informant qu'il peut participer à un nouvel appel de groupe. Cette information est par exemple un signal sonore. Le procédé s'arrête alors suite à l'étape 600.

On peut noter que dans le cas où aucun appel de groupe du type GID n'a été préalablement diffusé sur la zone géographique définie par l'information de localisation GCA, aucune information de référence Ref2 ne peut être récupérée à partir de la mémoire MEM2. L'étape d'extraction 800 est alors suivie de l'étape de mémorisation 1200, elle-même suivie de l'étape 600.

Selon un mode de réalisation du procédé, l'information de référence Ref1 est incluse uniquement dans le message de notification lorsque le signal qui porte ce message est diffusé périodiquement.

Selon un mode de réalisation du procédé, dans le cas où l'information de localisation GCA définit une zone géographique de diffusion d'un appel de groupe comme étant l'union des couvertures de plusieurs stations de base, le procédé est
caractérisé en ce que la même information de référence Ref1 est incluse dans chaque message de notification diffusé par chacune de ces stations de base.

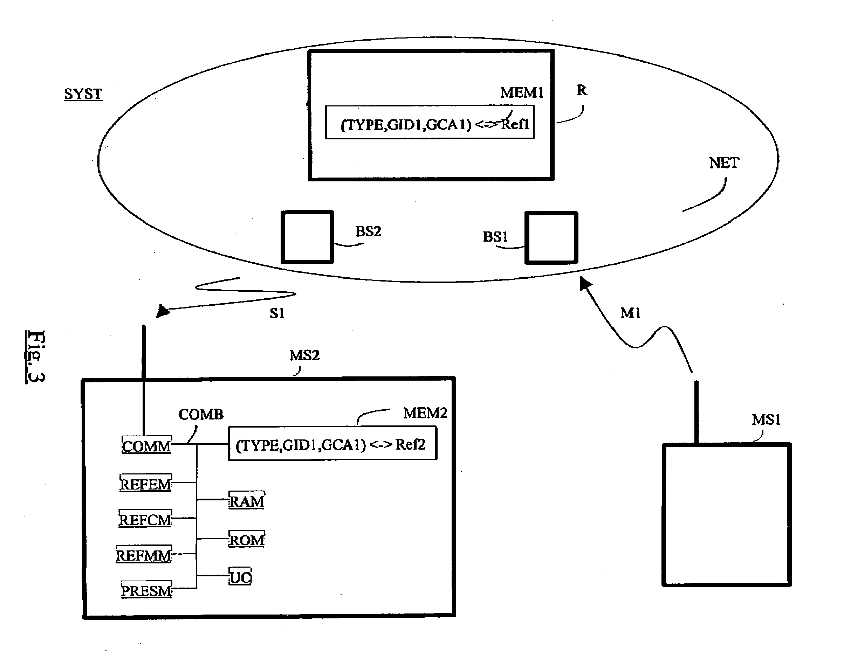

La Fig. 3 est un schéma d'un système SYST de téléphonie cellulaire supportant la diffusion d'appels de groupe selon la présente invention.

Le système de téléphonie SYST comporte, selon l'exemple de la Fig. 3, l'entité réseau R et les deux stations mobiles MS1 et MS2 qui se trouvent sous la couverture des stations de base respectives BS1 et BS2.

L'entité réseau R, qui peut être de manière non limitative une station de base, est destinée à mémoriser dans l'une de ses mémoires MEM1 une relation entre chaque couple d'informations (GID, GCA) possiblement utilisé par la station mobile MS1 pour initier un nouvel appel de groupe et une information de référence Ref1 unique. Selon l'exemple de la Fig. 3, seule la relation entre un couple d'informations (GID, GCA) et une information de référence Ref1 est représentée.

La station mobile MS1 est adaptée à initier un nouvel appel de groupe par l'émission d'un message d'établissement d'appel de groupe M1 à destination de l'entité réseau R du réseau de téléphonie NET via la station de base BS1. Ce message d'établissement comporte notamment un couple d'informations (GID, GCA).

La station mobile MS2 comporte un bus de communication COMB auquel sont reliés une unité centrale UC, une mémoire non volatile ROM, une mémoire vive RAM, et des moyens COMM de communication avec les autres entités réseau du système de téléphonie cellulaire.

La mémoire non volatile ROM mémorise les programmes mettant en oeuvre l'invention et plus particulièrement les étapes 400, 600, 800, 900, 1000, 1100 et 1200 du procédé décrit en relation avec la Fig. 2. La mémoire non volatile ROM est par exemple un disque dur ou une mémoire Flash. De manière plus générale, les programmes selon la présente invention sont mémorisés dans un moyen de stockage. Ce moyen de stockage est lisible par un ordinateur ou un microprocesseur. Ce moyen de stockage est intégré ou non à la station mobile MS2, et peut être amovible. Les programmes sont alors exécutés directement en lisant les instructions mémorisées dans ce moyen de stockage ou exécutés suite à leur transfert préalable dans la mémoire RAM qui contient alors le code exécutable de l'invention ainsi que les données nécessaires à la mise en oeuvre de l'invention.

Les moyens de communication COMM sont adaptés pour recevoir des signaux S1 porteurs d'un message de notification d'appel de groupe, et notamment un message de notification N1 créé par l'entité réseau R. Les signaux S1 sont diffusés par des stations de base du système SYST et notamment, selon l'exemple de la Fig. 3, par la station de base BS2.

La station mobile MS2 comporte également des moyens REFEM pour extraire l'information de référence Ref1 à partir du message de notification N1 une fois que le signal S1 porteur de ce message a été reçu, des moyens REFCM pour comparer l'information de référence Ref1 ainsi extraite et une information de référence Ref2 relative au couple d'informations (GID1, GCA1), mémorisée au préalable dans sa mémoire MEM2.

On peut noter que, selon une variante, la mémoire MEM2 est une mémoire d'une autre entité. Cette variante nécessite alors que la station mobile MS2 et cette autre entité entrent en communication pour que la station mobile MS2 récupère cette information de référence Ref2.

La station mobile MS2 comporte de plus des moyens REFMM pour mémoriser en relation avec le couple d'informations (GID, GCA) dans la mémoire MEM2 l'information de référence Ref1 ainsi extraite, et des moyens PRESM tels que, de manière non limitative, un haut-parleur ou un écran de visualisation, pour présenter à l'utilisateur de la station mobile MS2 une information, par exemple audio ou visuelle, informant cet utilisateur qu'un nouvel appel de groupe est diffusé.

## Revendications

1. Procédé de détermination d'un appel de groupe nouvellement diffusé par au moins une station de base d'un système de téléphonie cellulaire supportant la diffusion d'appels de groupe, ledit nouvel appel de groupe étant notifié à chaque station mobile se trouvant sous la couverture de ladite ou de l'une desdites stations de base par l'intermédiaire d'un signal destiné à porter un message dit de notification dudit appel de groupe créé au cours d'une étape de création (200) par une entité dudit système de téléphonie cellulaire, **caractérisé en ce qu'**au cours de ladite étape de création, une information (Ref1), dite de référence qui est destinée à identifier de manière unique ledit appel de groupe, est incluse dans ledit message de notification.

2. Procédé selon la revendication 1, **caractérisé en ce que** ladite étape de création est précédée d'une étape d'obtention (700) de ladite information de référence (Ref1) à partir d'une première mémoire (MEM1) de ladite entité réseau.

3. Procédé selon la revendication 2, **caractérisé en ce que** ladite étape d'obtention (700) comporte une sous-étape de récupération d'une information de référence (Ref3) préalablement mémorisée dans ladite première mémoire (MEM1), une sous-étape de modification de ladite information de référence ainsi récupérée et d'une sous-étape de remplacement de ladite information de référence (Ref3) préalablement mémorisée dans ladite première mémoire (MEM1) par ladite information de référence modifiée, ladite information de référence (Ref2) obtenue au cours de ladite étape d'obtention (700) étant alors l'information de référence ainsi modifiée.

4. Procédé selon l'une des revendications précédentes, ledit message de notification contenant en outre un couple d'informations formé d'un identifiant (GID1) du type dudit nouvel appel de groupe et d'une information de localisation (GCA1) dudit nouvel appel de groupe, **caractérisé en ce qu'**il comporte en outre :
- une étape (800) d'extraction de ladite information de référence (Ref1) à partir du message de notification porté par un signal une fois que celui-ci a été reçu par une station mobile,
- une étape (1000) de comparaison de ladite information de référence (Ref1) ainsi extraite et d'une information de référence (Ref2) récupérée à partir d'une deuxième mémoire (MEM2) et correspondant audit couple d'informations, et
- dans le cas où les informations de référence (Ref1, Ref2) ainsi comparées sont différentes,
- une étape (1200) de mémorisation dans ladite deuxième mémoire (MEM2) et en relation avec ledit couple d'informations de l'information de référence (Ref1) ainsi extraite, et
- une étape (600) de présentation à l'utilisateur de ladite station mobile d'une information informant cet utilisateur qu'un nouvel appel de groupe est diffusé.

5. Procédé selon la revendication 4, **caractérisé en ce que** ladite étape de comparaison (1000) est destinée à être exécutée par ladite station mobile qui a reçu un signal porteur d'un message de notification.

6. Procédé selon la revendication 4 ou 5, **caractérisé en ce que** ladite deuxième mémoire (MEM2) est une mémoire de ladite station mobile.

7. Procédé selon l'une des revendications 1 à 6, **caractérisé en ce que** l'information de référence (Ref1) est incluse uniquement dans le message de notification lorsque le signal qui porte ce message est diffusé périodiquement.

8. Procédé selon l'une des revendications précédentes, l'information de localisation (GCA1) définissant une zone géographique de diffusion dudit appel de groupe comme étant l'union des couvertures de plusieurs stations de base, **caractérisé en ce que** la même information de référence (Ref1) est incluse dans chaque message de notification diffusé par chacune desdites stations de base.

9. Station mobile destinée à être utilisée dans un système de téléphonie cellulaire supportant la diffusion d'appels de groupe, ladite station mobile étant adaptée à recevoir un signal destiné à porter un message dit de notification d'appel de groupe créé par une entité dudit système de téléphonie cellulaire, **caractérisée en ce que**, une information, dite de référence, définissant de manière unique ledit appel de groupe, étant incluse dans le message de notification, ladite station mobile comporte :
- des moyens (REFEM) pour extraire ladite information de référence à partir du message de notification une fois qu'un signal porteur de ce message a été reçu,
- des moyens (REFCM) pour comparer ladite information de référence ainsi extraite et une information de référence relative audit couple d'informations mémorisée au préalable dans une mémoire,
- des moyens (REFMM) pour mémoriser dans ladite mémoire l'information de référence ainsi extraite en relation avec ledit couple d'informations, et
- des moyens (PRESM) pour présenter à l'utilisateur de ladite station mobile une information informant cet utilisateur qu'un nouvel appel de groupe est diffusé.

10. Entité réseau destinée à être utilisée dans un système de téléphonie cellulaire supportant la diffusion d'appels de groupe, ladite entité étant responsable de la création d'un signal portant un message dit de notification utilisé pour notifier aux stations mobiles dudit système de téléphonie cellulaire qu'un appel de groupe est diffusé, ledit message de notification contenant notamment un couple d'informations formé d'un identifiant du type dudit nouvel appel de groupe et d'une information de localisation dudit nouvel appel de groupe, **caractérisée en ce qu'**elle comporte
- des moyens (REFOM) pour obtenir une information, dite de référence, définie de manière unique pour ledit nouvel appel de groupe, et
- des moyens (NMCM) pour inclure ladite information de référence (Ref1) dans le message de notification d'appel de groupe.

11. Système de téléphonie cellulaire supportant la diffusion d'appels de groupe, **caractérisé en ce qu'**au moins l'une de ses entités réseau comporte des moyens conformes à la revendication 10 et qu'au moins une station mobile destinée à accéder audit système comporte des moyens conformes à la revendication 9.

12. Signal destiné à porter un message de notification d'un appel de groupe entre entités d'un système de téléphonie cellulaire supportant la diffusion d'appels de groupe, **caractérisé en ce que** ledit message de notification comporte en outre une information de référence destinée à identifier de manière unique ledit appel de groupe diffusé par ledit système de téléphonie cellulaire.
